# EUROPEAN PATENT APPLICATION

(11) **EP 1 961 799 A1**
(43) Date of publication of application: **27.08.2008**
(21) Application number: 07102733.8
(22) Date of filing: 20.02.2007
(51) Int. Cl.: C09K 8/584, C09K 8/592, C10G 1/04, C10G 9/00, C10G 11/00, C10G 11/02, C10G 11/04

(54) **Process for reducing the viscosity of highly viscous hydrocarbon mixtures**

(71) Applicant: BIOeCON International Holding N.V., Curaçao (AN)
(72) Inventor: O'CONNOR, Paul, 3871 KM, HOEVELAKEN (NL)
(74) Representative: Rasser, Jacobus Cornelis

(57) **Abstract**

A process is disclosed for reducing the viscosity of a hydrocarbon mixture having a viscosity, at 20°C, of greater than -10,000 cP. The process comprises comprising the steps of:
a) contacting the hydrocarbon mixture with inorganic catalyst particles in the presence of water and a surfactant;
b) catalytically reducing the average molecular weight of the hydrocarbon mixture.

The process is particularly suitable for making heavy fossil fuel sources amenable to processing in conventional refinery equipment.

## Description

### BACKGROUND OF THE INVENTION

### 1. Field of the Invention

The present invention relates to a process for reducing the viscosity of highly viscous hydrocarbons and hydrocarbon mixtures.

### 2. Description of the Related Art

As the more accessible sources of fossil oils are becoming depleted, there is a need to exploit fossil hydrocarbons of increasingly greater viscosities. Examples of highly viscous hydrocarbon materials are heavy crudes, tar stands, oil sands, and shale oils. Unlike light crudes, these materials are too viscous to be pumped from a well or to be transported through a pipeline.

There is a need for reducing the viscosities of these materials so they may be pumped and/or transported through a pipeline,

Prior art methods of reducing the viscosity of a heavy crude included the injection of steam into a well, with or without the addition of suitable surfactants. The presence of water and the high temperature converts the hydrocarbon mixture to a pumpable emulsion. The presence of a surfactant aids the formation of an emulsion, and in stabilizing the emulsion after it is formed. However, large quantities of water are needed for these emulsions, requiring an energy investment to create the steam, and creating a need for removing water from the hydrocarbon mixture during subsequent processing.

There is also a need to reduce the environmental impact of the contaminated water which needs to be disposed (in lakes or rivers).

It is therefore desirable to develop a process for reducing the viscosity of highly viscous hydrocarbon mixtures without the need for introducing large amounts of water and/or steam.

Summary of the invention

The present invention relates to a process for reducing the viscosity of a hydrocarbon mixture having a viscosity of greater than 10,000 cP, in particular greater than 100,000 cP, said process comprising the steps of:

a) contacting the hydrocarbon mixture with inorganic catalyst particles in the presence of water and a surfactant;

b) catalytically reducing the average molecular weight of the hydrocarbon mixture.

DESCRIPTION OF ILLUSTRATIVE EMBODIMENTS

The following is a description of certain embodiments of the invention, given by way of example only.

The present invention relates to a process for reducing the viscosity of highly viscous hydrocarbon mixtures. Highly viscous hydrocarbon mixtures are encountered in mineral deposits, for example in the form of heavy crudes, tar stands, oil sands, shale oils, and the like. Highly viscous hydrocarbon mixtures are also formed in traditional refining processes, for example as residue resulting from fracturing distillation of crude oil.

As used herein, the term "highly viscous" refers to materials having a viscosity at 20 °C of greater than 10,000 cP, more particularly greater than 100,000 cP. The term encompasses bitumen, which typically has a viscosity on the order of 10⁶ cP. The term also includes tar or pitch, which has a viscosity on the order of 10¹⁰ cP.

The high viscosity of these hydrocarbon mixtures makes them difficult to process. Conventional processes rely on hydrocarbons' being pumpable. For example, crude oil is pumped from the well, and is transported to holding tanks via a pipeline. From the holding tanks the crude oil is transferred to tank cars or tankers, again using pumps. Upon arrival at the refinery, crude oil is removed from the tank cars or tankers again as a pumpable liquid. In other words, the entire oil processing infrastructure is based on the pumpability of the raw materials.

As the sources of lighter crudes are becoming depleted, there's an increasing need for switching to heavier crudes or even more viscous hydrocarbon mixtures, such as oil sands, tar stands, and shale oils, These materials require a processing step aimed at reducing their viscosities before they can be transported and process as the more traditional lights are crudes.

Preferably, the viscosity reduction step takes place at the location where the hydrocarbon mixture is extracted from its mineral deposits. For example, it is desirable to reduce the viscosity of heavy crude within the well, so that it may be pumped and transported as would be a lighter crude. Similarly, tar stands or oil sands are best treated at the location where they are mined, so that the hydrocarbon mixture may be separated from the sand and itself be transported as a pumpable liquid.

In general, liquids having a viscosity of 100,000 cP or less are considered "pumpable" for the purpose of the present invention. Nevertheless, the present process may be applied to liquids having a viscosity of less than 100,000 cP, for example, liquids having a viscosity in the range of 10,000 to 100,000 cP, When used in this fashion, the process of the present invention still provides advantages in that the resulting liquid requires less energy for pumping, and more readily flows from tanks and containers by gravity flow.

The process of the present invention also has applications within the refinery itself. Typically, the first step in the refining operation is vacuum distillation of the crude. The residue of the vacuum distillation step is a highly viscous hydrocarbon mixture. Likewise, the FCC process produces a bottoms portion as well. As heavier feedstocks are used, the amount of bottoms produced in these processes also increases. The process of the present invention can successfully be used for reducing the viscosities of these hydrocarbon streams.

The essential feature of the process of the present invention is the combined use of surfactants and small inorganic catalyst particles. The process of the present invention does not require the formation of an aqueous emulsion. Although some water may be added, for example in the form of steam in order to increase its temperature of the hydrocarbon mixture, the amount of water can be kept small as compared to the amount that would be needed to form an aqueous emulsion. It is possible to operate the process of the present invention without the addition of any significant amounts of water, and this embodiment is preferred.

The use of surfactants is known for processes involving formation of aqueous emulsions of hydrocarbon mixtures. In that context, the role of the surfactants is to provide a reduced surface tension between droplets of hydrocarbons and a continuous water phase. Accordingly, the surfactants are selected on their ability to lower the type of carbon/water interface surface tension.

The role of the surfactants in the process of the present invention is to make inorganic catalyst particles compatible with hydrocarbon mixtures. This requires that the surfactant molecules have a hydrophobic tail that is soluble in hydrocarbons, in particular in paraffinic and aromatic hydrocarbons. The surfactant molecules must also have a polar head that has affinity to the surface of an inorganic article. Although these requirements are different from those of surfactants intended to stabilize and form emulsions, it has surprisingly been found that many of the surfactants used for emulsifying hydrocarbon streams are also suitable for use in the process of the present invention.

The process of the present invention can be used for reducing the viscosity of any highly viscous hydrocarbon mixture. Specifically, the process can be used in the field for reducing the viscosity of a mineral hydrocarbon source to facilitate the extraction of the hydrocarbon mixture from its geological deposits. The process can also be used downstream, in particular for reducing the viscosities of highly viscous hydrocarbon streams in the refinery process.

The catalyst particles are of a size suitable for heterogeneous catalysis. As a general rule, small catalyst particle sizes are preferred in heterogeneous catalysis, because the smaller a particle the greater the fraction of the available atoms are present at the surface of the particle. Therefore, particle sizes of less than 100 microns are suitable, particles of less than 1,000 nanometers being preferred, particle sizes of less than 100 nm being more preferred. It has, however, been discovered that below a particle size of about 10 nm (the "lglesia limit") many heterogeneous catalytic compounds lose their catalytic properties. For this reason catalytic particles having a particle size of less than 10 nm are not desirable. Another reason to avoid these very small particles is the potential health hazards related to the use of very fine nano particles.

Preferred catalytic materials are materials that catalyze the cracking of hydrocarbon molecules. However, compared to the requirements of, for example, a fluid catalytic cracking unit, the process of the present invention does not impose high demands in terms of catalytic activity and catalytic selectivity. Accordingly, catalytic materials may be selected primarily based on their cost. For example, low cost sources of alumina, such as gibbsite and Bauxite Ore Concentrate (BOC) are suitable for use in the process of this invention.

Other suitable materials include natural or synthetic clays, hydrotalcites, sepiolites, bentonite, saponite. Also suitable are silica-aluminas, zeolites and modified aluminas such as phosphated or doped aluminas, aluminum phosphate and the like.

Spent catalysts, for example spent FCC catalysts, form another suitable source of catalytic materials for use in the process of the present invention. These materials are waste products of other processes (such as the FCC process), and accordingly abundantly available at low cost.

The surfactant may be a cationic, a nonionic, or an anionic surfactant. Suitable cationic surfactants include quaternary ammonium compounds, in particular those having at least one carbon chain comprising at least 12, preferably at least 16, carbon atoms.

Suitable nonionic surfactants include ethoxylated alcohols, such as ethoxylated glycols. Preferably the nonionic surfactants have a hydrophilic/lipophilic balance of at least 8, preferably at least 12.

Anionic surfactants tend to be lower in cost than either cationic or nonionic surfactants, and are therefore preferred for use in the process of this invention. Preferred anionic surfactants include the sulfonated hydrocarbons, in particular alkyl sulfonates, aryl sulfonates, and alkyl/aryl sulfonates. Preferably the number of carbon atoms in the alkyl, aryl, or alkyl/aryl groups of the surfactant molecule is at least 12, preferably at least 16, more preferably at least 20.

The catalyst particles and the surfactants may be mixed with the hydrocarbon mixture together or separately. If the three components are mixed separately it is preferred to first mix the hydrocarbon mixture and the surfactant, and to subsequently add the catalyst particles. It is preferred, however, to first mix the catalyst particles and the surfactant material, and then blend this mixture with the hydrocarbon mixture.

For proper interaction of the surfactant with the catalyst particles it is desirable to provide water in quantities sufficient to dissolve the surfactant material. Other solvents like naphta, light cycle oil can also be used. It is however convenient to use steam as the water source. This results in a high-temperature slurry of catalyst particles in a concentrated aqueous surfactant solution. The high temperature of the slurry aids its penetration into the hydrocarbon mixture.

The process of the invention requires mixing of the catalyst particles and the surfactant material with the hydrocarbon mixture. If the hydrocarbon mixture is available as a separate stream, such as a bottoms product in a refinery, this mixing may be carried out in a suitable mechanical mixer. Depending on the viscosity of the hydrocarbon mixture, suitable mechanical mixers include helical mixers, kneaders, ball mills, and the like. If the viscosity of the hydrocarbon mixture is not too high (less than about 250,000 cP), the catalyst particles and the surfactant material may be mixed with the hydrocarbon mixture by injecting an aqueous slurry of the catalyst particles and the surfactant material into a reactor containing the hydrocarbon mixture.

The catalytic process for reducing the viscosity of a refinery bottoms product may be a vis-breaking process, a hydro-conversion process (for example a hydrocracking process), or a fluid catalytic cracking process. Examples of suitable vis-breaking processes include conventional vis-breaking, soaker vis-breaking, deep thermal conversion, coking, and the like.

The FCC process may be carried out in a riser or downer reactor, and may be a conventional FCC process, a resid FCC process, a low-profile FCC process, and the like.

The process of this invention is of particular interest for reducing the viscosity of a mineral hydrocarbon source, such as heavy crude, tar sand, oil sand, or shale oil. The mineral hydrocarbon source may be first extracted from its geological deposit, and subsequently converted at the site of exploitation to a lower viscosity using the process of this invention. For example, tar sand may be excavated from its geological deposit, ground to a suitable particle size, and then mixed with catalyst particles and surfactant material in, for example, a kneader or a screw extruder. In a subsequent catalytic reaction the viscosity of the tar is reduced.

Suitable processes for the reduction of the viscosity of a tar include thermal cracking, pyrolysis, hydrocracking, and catalytic cracking.

In a settlement tank the resulting product is separated into a solid phase and two liquid phases. The solid phase comprises sand and some of the catalyst particles. The first liquid phase is a water-rich phase, comprising the surfactant material and most of the catalyst particles, kept in suspension by the surfactant. The second liquid phase is a pumpable hydrocarbon phase, which may be transported to a refinery by conventional means (pipeline, tank truck, railcar, etc.) for further processing.

The water-rich phase can be recycled for repeated use with a new batch of tar sand.

It may be preferred to subject the hydrocarbon source to the viscosity-reducing process before it is extracted from its geological deposit. For example, holes may be drilled into a tar sand deposit, and a hot aqueous slurry of surfactant material and catalyst particles is then injected into these drill holes, for example using steam pressure. An auger may be used to stimulate contact of the slurry with the tar sand deposit surrounding the drill hole. After the viscosity of the tar is sufficiently reduced it may be pumped from the drill hole.

Thus, the invention has been described by reference to certain embodiments discussed above. It will be recognized that these embodiments are susceptible to various modifications and alternative forms well known to those of skill in the art.

## Claims

1. A process for reducing the viscosity of a hydrocarbon mixture having a viscosity, at 20°C, of greater than -10,000 cP, said process comprising the steps of:
a) contacting the hydrocarbon mixture with inorganic catalyst particles in the presence of water and a surfactant;
b) catalytically reducing the average molecular weight of the hydrocarbon mixture.

2. The process of claim 1 wherein the viscosity of the hydrocarbon mixture, at 20 °C, is greater than 100,000 cP.

3. The process of claim 1 wherein the surfactant is an anionic surfactant.

4. The process of claim 3 wherein the anionic surfactant is selected from the group consisting of alkyl sulfonates, alky-aryl sulfonates, and mixtures thereof.

5. The process of any one of the preceding claims wherein the hydrocarbon mixture is present in a geological formation, and the process is carried out within said geological formation.

6. The process of any one of the preceding claims wherein the inorganic catalyst particles comprise particles having a particle size in the range of 10 nm to 100 µm, preferably from 10 nm to 1000 nm, more preferably from 10 nm to 100 nm.

7. The process of any one of the preceding claims wherein the catalyst particles are formed in the presence of the hydrocarbon mixture.

8. The process of any one of the preceding claims wherein step b) comprises injecting steam into the hydrocarbon mixture.

9. The process of any one of claims 4 through 8 comprising the additional step of;
c) removing the product of step b) from the geological formation by pumping.
